**Europäisches Patentamt**

**European Patent Office**

**Office européen des brevets**

(19)

(11) Veröffentlichungsnummer: **0 092 087**
**B1**

(12) **EUROPÄISCHE PATENTSCHRIFT**

(45) Veröffentlichungstag der Patentschrift:
28.10.87

(51) Int. Cl.⁴: **H 01 S 3/097**

(21) Anmeldenummer: **83103251.1**

(22) Anmeldetag: **31.03.83**

(54) Anordnung zur Anpassung von pulsformenden Netzwerken an die Erfordernisse des Anregungskreises eines TE-Hochenergielasersystems.

(30) Priorität: **19.04.82 DE 3214480**
**30.08.82 DE 3232225**

(43) Veröffentlichungstag der Anmeldung:
**26.10.83 Patentblatt 83/43**

(45) Bekanntmachung des Hinweises auf die Patenterteilung:
**28.10.87 Patentblatt 87/44**

(84) Benannte Vertragsstaaten:
**AT CH FR GB IT LI**

(56) Entgegenhaltungen:
**EP - A - 0 024 576**
**DE - A - 3 128 206**
**US - A - 4 053 853**

**JAPANESE JOURNAL OF APPLIED PHYSICS, Band 20, Nr. 1, Januar 1981, Seiten 129-137, TOKYO, (JP), M. MAEDA et al.: "Electrical circuit design of fast-discharge system for high-power rare-gas halide lasers"**

(73) Patentinhaber: **Siemens Aktiengesellschaft Berlin und München, Wittelsbacherplatz 2, D-8000 München 2 (DE)**

(72) Erfinder: **Cirkel, Hans-Jürgen, Dr., Anderlohrstrasse 9, D-8520 Erlangen (DE)**
Erfinder: **Bette, Willi, Penzoldtstrasse 5, D-8520 Erlangen (DE)**
Erfinder: **Müller, Reinhard, Vogelherd 97, D-8520 Erlangen (DE)**

**Beschreibung**

Die Erfindung bezieht sich auf eine Anordnung zur Anpassung von pulsformenden Netzwerken an die Erfordernisse des Anregungskreises eines TE-Hochenergielasersystems, gemäss Oberbegriff des Anspruchs 1.

Ein TE-Hochenergielasersystem mit den gattungsgemässen Merkmalen ist durch die DE-A-2 932 781 bekannt. Geeignete Vorionisierungseinrichtungen dafür sind insbesondere beschrieben in der DE-A-3 035 730 und der DE-A-3 035 702. Hier wie im folgenden wird vorausgesetzt, dass Hochenergielasersysteme so wie im Gattungsbegriff definiert, mit Vorionisierungs-Einrichtungen ausgerüstet sind; deswegen erübrigt sich eine Darstellung im Rahmen der vorliegenden Anmeldung, die sich mit dem Problem der günstigen Ausgestaltung des pulsformenden Netzwerkes und der Bemessung seiner Schaltelemente innerhalb des Anregungskreises befasst, wobei unter Anregungskreis sowohl das pulsformende Netzwerk mit seinem schnellen Hochspannungsschalter als auch der Laserkopf verstanden wird.

TE-Hochenergielaser (TE = transversely excited) werden in kostengünstiger Ausführung und mit hoher mittlerer Strahlungs- bzw. Lichtleistung für fotomechanische Anwendungen, insbesondere im industriellen Bereich, benötigt.

Für den Betrieb dieser Laser sind möglichst niedrige Wellenwiderstände des pulsformenden Netzwerkes bei ausreichend hohen Stromanstiegsgeschwindigkeiten günstig. Dies kann man durch eine geeignete Kombination der Induktivitäten des Anregungskreises mit den Kapazitäten des pulsformenden Netzwerkes erreichen. Bei manchen Anwendungen dieser TE-Laser ist es darüber hinaus wünschenswert, einen möglichst langen Laserimpuls zu erzielen. Diese Forderungen würden am vorteilhaftesten erfüllt mit einem Rechteckimpuls als Anregungsimpuls, d. h. einem Stromimpuls mit einer steilen Anstiegsflanke, einem möglichst breiten, flachen Dach und einer steilen Abfallsflanke. Der Erfindung liegt die Aufgabe zugrunde, die Anordnung der eingangs definierten Art so auszugestalten, dass man mit ihr innerhalb des pulsformenden Netzwerkes Anregungsimpulse erzeugen kann, die den vorgenannten Anforderungen möglichst weitgehend entsprechen.

In der nicht vorveröffentlichten DE-A-3 128 206 ist eine Anordnung der eingangs genannten Art vorgeschlagen worden, bei der diejenigen Beläge des Bandleiterkondensators, welche an die hochspannungsseitige erste Elektrode der Laserkammer angeschlossen sind, mit die Länge ihres Strompfades für den Entladestrom vervielfachenden Einschnitten versehen sind. Dieser Anordnung sind indessen Grenzen für die Impulsverlängerung gesetzt, deren Überschreitung eine der vorliegenden Erfindung zugrundeliegende spezielle Aufgabe ist.

Weiterhin gehört zur speziellen Aufgabe der Erfindung, eine einfachere und kostengünstigere Herstellung der Kondensatorbeläge und – im Falle eines Bandleiterkondensators mit flüssigem Dielektrikum, insbesondere Wasser- der Kondensatorplatten zu ermöglichen.

Erfindungsgemäss wird die gestellte Aufgabe durch die im Kennzeichen des Anspruchs 1 angegebenen Merkmale gelöst. Vorteilhafte Weiterbildungen sind in den Unteransprüchen 2 bis 8 enthalten. Die mit der Erfindung erzielbaren Vorteile sind vor allem darin zu sehen, dass man auf einfache Weise Laufzeitketten unterschiedlicher Impulsverlängerung nach einem einheitlichen Konzept herstellen kann, indem man lediglich die Parameter für die Teilbelaggrösse, die Spaltweite sowie die Koppelspulen hinsichtlich ihrer Grösse, Anzahl und Anschlussstellen variiert.

Im folgenden wird anhand der Zeichnung, in der mehrere Ausführungsbeispiele der Erfindung dargestellt sind, diese noch näher erläutert. Darin zeigt, teils in schematischer, vereinfachter Darstellung:

Fig. 1 das Schaltbild eines Laser-Anregungskreises in Blümlein-Schaltung;

Fig. 2 die zugehörige räumliche Anordnung eines Bandleiterkondensator-Paketes mit Laserkammer und schnellem Hochspannungsschalter an den beiden äusseren Paketseiten;

Fig. 3 das Schaltbild eines Anregungskreises in Charge-Transfer-Schaltung;

Fig. 4 die zugehörige räumliche Anordnung eines Bandleiterkondensator-Paketes mit Laserkammer und schnellem Hochspannungsschalter an den beiden äusseren Längsseiten, in entsprechender Darstellung zu Fig. 2, und

Fig. 5 die Ausbildung eines Kondensatorbelages mit Teilfugen und Koppel-Induktivitäten zwischen den Teilblägen in Draufsicht zur Ausbildung einer Laufzeitkette.

Der in Fig. 5 dargestellte Kondensatorbelag B ist in drei rechteckige bzw. im wesentlichen rechteckige Teilbeläge $B_1$, $B_2$ und $B_3$ durch die zwischen den Belägen angeordneten Teilfugen $g_1$, $g_2$ aufgeteilt. Benachbarte Teilbeläge sind über die Koppel-Induktivitäten $L_1$ (Teilfuge $g_1$) und $L_2$ (Teilfuge $g_2$) jeweils miteinander leitend verbunden. Die Höhen der Teilbeläge $B_i$ sind allgemein mit $h_i$ bezeichnet und speziell mit $h_1$, $h_2$ und $h_3$ für die Teilbeläge gleicher Numerierung; die Längen der Teilbeläge $B_i$ sind allgemein mit $l_i$ und speziell mit $l_1$, $l_2$ und $l_3$ bezeichnet. Je nach Länge der Beläge B bzw. der Laufzeitkette aus den einzelnen Teilbelägen $B_i$ können n Teilbeläge, n−1 zugehörige Koppel-Induktivitäten und n−1 zugehörige Teilfugen vorhanden sein mit – bei rechteckiger Grundfläche – entsprechenden Höhenmassen $h_n$ und Längenmassen $l_n$, wobei $n \geq 2$.

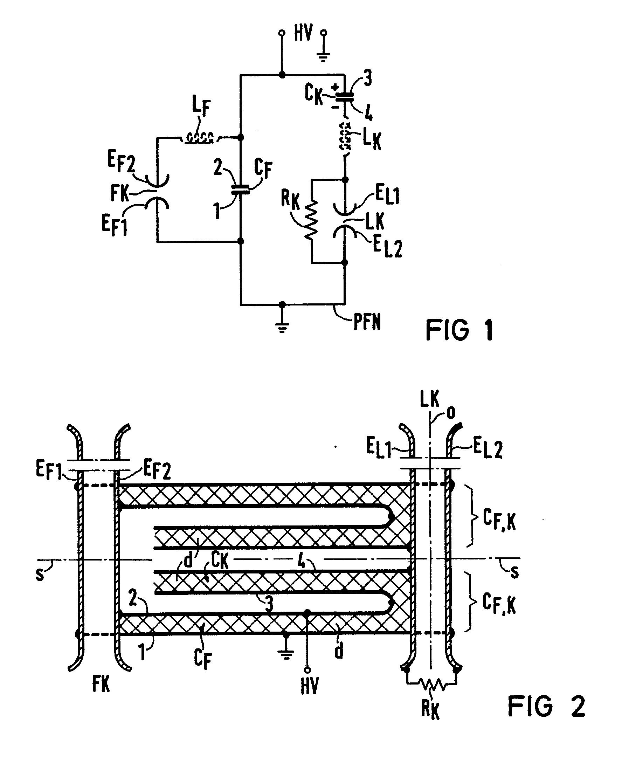

Die Koppel-Induktivitäten $L_i$ sind, wie dargestellt, als kleine Spulen ausgebildet, deren Grösse von der gewünschten Impulsverzögerung abhängt; sie können auch als kleine Drahtstücke ausgebildet sein. Gemäss Fig. 5 sind die Koppel-Induktivitäten $L_i$ teilfugenüberbrückend an jeweils drei diskreten Punkten der Begrenzungskanten der Teilbeläge $B_i$ angeordnet und angeschlossen, und zwar im Oberkanten-, Unterkanten- und Mitten-Bereich. Es ist jedoch auch möglich, die Spulen von Teilfuge zu Teilfuge alternierend im Oberkanten- und Unterkanten-Bereich anzuordnen und anzuschliessen, wodurch ein stark mäandrierender Stromverlauf erzeugt wird, bzw. die mittleren Anschlussspulen jeweils zu belassen und nur die äusseren Anschlussspulen alternieren zu lassen, wodurch ein weniger stark mäandrierender Stromverlauf hervorgerufen wird. Die Koppel-Induktivitäten sind an die zugehörigen Teilbeläge $B_i$ zweckmässig intermetallisch durch Weichlöten, Hartlöten oder durch Schweissen angeschlossen. Grundsätzlich sind jedoch auch Klemm-, Steck-, Schraubverbindungen oder Wickel (wire – wrap) – Verbindungen, also mechanische Anschlussverbindungen möglich. Aus Fig. 5 erkennt man, dass die Flächen der Teilbeläge $B_i$ und die Teilfugen $g_i$ im wesentlichen jeweils untereinander gleich gross sind. Es ist jedoch in Anpassung an die gewünschte Impulsform und Impulsverzögerung auch möglich, die Flächen der Teilbeläge $B_i$ und/oder die Weite der Teilfugen $g_i$ und/oder die LR-Werte der Koppel-Induktivitäten $L_i$ zumindest zum Teil voneinander unterschiedlich zu gestalten. Mit A ist eine Anschlusslasche oder -Fahne zum Anschliessen des Belages B an einer Laser-Elektrode bzw. eine Elektrode des Hochspannungsschalters FK bezeichnet. Die Aufteilung des Belages B gemäss Fig. 5 kann Anwendung finden bei dem pulsformenden Netzwerk PFN in Blümlein-Schaltung gemäss Fig. 1 und Fig. 2 beim Belag 4 des zweiten Bandleiterkondensators $C_K$ oder darüber hinausgehend beim Belag 4 und den Belägen 2 und 3 des ersten und zweiten Bandleiterkondensators $C_F$ und $C_K$.

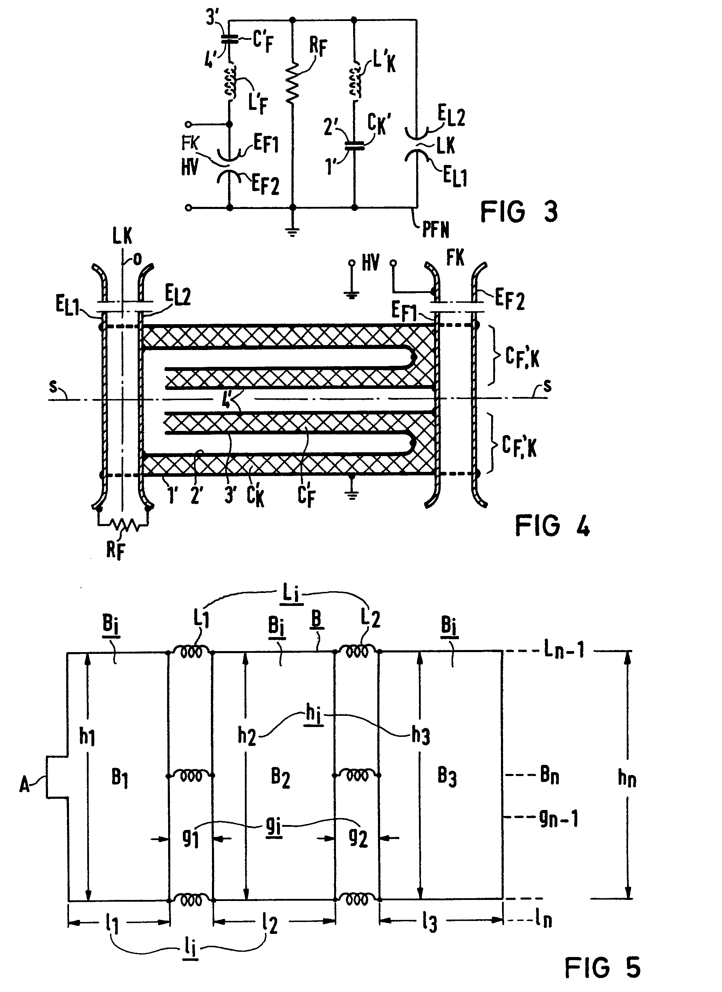

Bei einem pulsformenden Netzwerk PFN in Charge-Transfer-Schaltung gemäss den Figuren 3 und 4 kann die Ausbildung des Belages B nach Fig. 5 Anwendung finden zumindest bei einer Teilfläche der gemeinsam an die eine Laser-Elektrode $E_{L2}$ angeschlossenen Beläge 2', 3' der ersten und zweiten Bandleiterkondensatoren $C_F'$, $C_K'$ und gemäss einer weiteren Ausführungsform darüber hinausgehend nicht nur bei den Belägen 2', 3' sondern auch beim Belag 4' des ersten Bandlei-terkondensators $C_F'$.

In Fig. 1 und Fig. 2 ist der bekannte Laser-Anregungskreis mit pulsformendem Netzwerk PFN dargestellt, wie er sich aus Fig. 1 und Fig. 2 der DE-A-2 932 781 ergibt, wobei jedoch noch die Ersatz-Induktivitäten $L_F$ und $L_K$ gestrichelt eingezeichnet sind, die sich insbesondere aus der Eigen-Induktivität des Hochspannungsschalters FK, des Laserkopfes LK, der Zuleitungen und der Bandleiterkondensatoren $C_F$ und $C_K$ ergeben.

Sinngemäss ist in Fig. 3 und Fig. 4 der bekannte Laser-Anregungskreis mit pulsformendem Netzwerk PFN in Charge-Transfer-Schaltung dargestellt, wie er sich aus Fig. 4 und Fig. 5 der genannten DE-OS ergibt, wobei auch hier wiederum die Ersatz-Induktivitäten $L_F$ und $L_K'$ gestrichelt eingezeichnet sind. In den genannten Figuren 1 und 4 bezeichnet LK den Laserkopf bzw. die Laserkammer mit den mindestens zwei mit Abstand einander gegenüberliegenden Laser-Elektroden $E_{L1}$, $E_{L2}$ zwischen denen die möglichst homogene lichtbogenfreie Kondensatorentladung im Gasraum der Laserkammer LK durch die vom pulsformen-den Netzwerk PFN erzeugten Hochspannungsim-pulse angeregt wird. FK ist der schon erwähnte schnelle Hochspannungsschalter, der eine Funkenkammer mit den Elektroden $E_{F1}$ und $E_{F2}$ sein oder auch als eine Anordnung von Thyratrons oder Plasmaschaltern ausgebildet sein kann. $R_K$ bedeutet eine parallel zur Laser-Entladungsstrekke geschaltete Impedanz, die hochohmig im Vergleich zum Laser-Innenwiderstand ist, HV die Hochspannung, s eine Symmetrieebene innerhalb des Kondensatorstapels, der aus den Kapazitätseinheiten $C_{F,K}$ aufgebaut ist. Die dargestellte spiegelbildliche Anordnung der Kapazitätseinheiten kann auch durch eine unsymmetrische ersetzt werden. Mit d ist der feste, flüssige oder gasförmige Isolierstoff für das Dielektrikum, durch Raster-Schraffur hervorgehoben, bezeichnet, mit o die optische Achse der Laserkammer LK.

In Fig. 3 und 4 sind die Bezugszeichen für die Bandleiterkondensatoren, ihre Beläge sowie die Ersatz-Induktivitäten jeweils mit einem Strich versehen, im übrigen ist die Bezeichnung so wie in Figuren 1 und 2 getroffen. Die Figuren 1 bis 4 zeigen lediglich Beispiele für das pulsformende Netzwerk PFN; dieses kann naturgemäss auch in abgewandelter Form Verwendung finden, so in «gestreckter» Anordnung oder mit einem flüssigen Dielektrikum, insbesondere chemisch reinem Wasser. Bei der Bemessung der Koppel-Induktivi-täten $L_i$ müssen die Ersatz-Induktivitäten $L_F$, $L_K$ bzw. $L_F'$, $L_K'$ berücksichtigt werden. Die zu $C_K'$ bzw. der Reihenschaltung LK–$L_K'$ parallel ge-schaltete, im Vergleich zur Laser-Entladungsstrecke hochohmige Impedanz ist hier mit $R_F$ bezeichnet.

## Patentansprüche

1. Anordnung zur Anpassung von pulsformenden Netzwerken an die Erfordernisse des Anre-gungskreises eines TE-Hochenergielasersy-stems, das mit Anregung durch möglichst homogene lichtbogenfreie Kondensatorentladung im Gasraum einer Laserkammer zwischen mindestens zwei mit Abstand einander gegenüberliegenden Laser-Elektroden arbeitet; dabei besteht das Hochenergielasersystem aus

– einem Laserkopf mit den erwähnten Laser-Elektroden innerhalb der Laserkammer (LK), welche jeweils parallel zur optischen Achse (o) des Laserkopfes sich erstrecken und bevorzugt einen in dieser Richtung ausgedehnten Vollquerschnitt aufweisen;

– mindestens einem schnellen Hochspannungsschalter (FK), durch dessen Aktivierung bzw. Zündung über das pulsformende Netzwerk die Hochspannungsimpulse an den Laser-Elektroden (EL1, EL2) erzeugbar sind;

– und aus dem genannten pulsformenden Netzwerk (PFN) mit dem Hochspannungsschalter und dem Laserkopf zugeordneten ersten und zweiten Bandleiterkondensatoren ($C_F$, $C_K$), welche mit ihren Belägen und ihren dazwischenliegenden dielektrischen Schichten im wesentlichen normal zur optischen Achse des Laserkopfes verlaufen, und im wesentlichen parallel zur optischen Achse des Laserkopfes zu einem Kondensatorpaket gestapelt sind und direkt oder mit seitlich herausgeführten Anschlussfahnen innerhalb des pulsformenden Netzwerkes angeschlossen sind, dadurch gekennzeichnet, dass

– bei einem pulsformenden Netzwerk (PFN) in Blümlein-Schaltung von den Belägen (1, 2, 3, 4) der ersten und zweiten Bandleiterkondensatoren ($C_F$, $C_K$) zumindest der an die eine Laser-Elektrode angeschlossene Belag (4) des zweiten Bandleiterkondensators ($C_K$)

– und bei einem pulsformenden Netzwerk (PFN) in Charge-Transfer-Schaltung von den Belägen der ersten und zweiten Bandleiterkondensator ($C_F'$, $C_K'$) zumindest eine Teilfläche der gemeinsam an die eine Laser-Elektrode angeschlossenen Beläge (2', 3') der ersten und zweiten Bandleiterkondensatoren

– in n Teilbeläge ($B_1$, $B_2$ ... $B_n$) mit $n-1$ Teilfugen ($g_1$, $g_2$ ... $g_{n-1}$) aufgeteilt und benachbarte Teilbeläge (B) über Koppel-Induktivitäten ($L_1$, $L_2$ ... $L_{n-1}$) jeweils miteinander leitend verbunden sind.

2. Anordnung nach Anspruch 1, für einen quaderförmigen Kondensatorstapel, dadurch gekennzeichnet, dass die Teilbeläge (B) jeweils rechteckige Grundflächen mit der Höhe ($h_i$) und der Länge ($l_i$) aufweisen.

3. Anordnung nach Anspruch 1 oder 2, dadurch gekennzeichnet, dass die Koppel-Induktivitäten ($L_i$) als kleine Spulen ausgebildet sind.

4. Anordnung nach Anspruch 1 oder 2, dadurch gekennzeichnet, dass die Koppel-Induktivitäten ($L_i$) als kleine Drahtstücke ausgebildet sind.

5. Anordnung nach einem der Ansprüche 1 bis 4, dadurch gekennzeichnet, dass die Anschlussstellen für die Koppel-Induktivitäten ($L_i$) an diskreten Punkten der Begrenzungskanten der Teilbeläge ($B_i$) angeordnet bzw. über die Höhe der Teilbeläge ($B_i$) verteilt sind.

6. Anordnung nach einem der Ansprüche 1 bis 5, dadurch gekennzeichnet, dass die Koppel-Induktivitäten ($L_i$) an die Teilbeläge ($B_i$) intermetallisch durch Weichlöten, Hartlöten oder durch Schweissen oder mechanisch durch Stecken, Klemmen und Schrauben oder durch eine Wickelverbindung (wire wrap) angeschlossen sind.

7. Anordnung nach einem der Ansprüche 1 bis 6, dadurch gekennzeichnet, dass die Flächen der Teilbeläge ($B_i$) und die Teilfugen ($g_i$) jeweils im wesentlichen untereinander gleich gross sind.

8. Anordnung nach einem der Ansprüche 1 bis 6, dadurch gekennzeichnet, dass jeweils die Flächen der Teilbeläge ($B_i$) und/oder die Weite der Teilfugen ($g_i$) und/oder die L,R-Werte der Koppel-Induktivitäten ($L_i$) zumindest zum Teil voneinander unterschiedlich sind.

## Claims

1. Arrangement for adapting pulse-shaping networks to the requirements of the excitation circuit of a high-energy TE laser system, which operates by excitement by an as homogenous as possible arc-free capacitor discharge in the gas space of a laser chamber between at least two laser electrodes in opposite spaced arrangement; the high-energy laser system comprising:

– a laser head with the said laser electrodes inside the laser chamber (LK), which extend in each case parallel to the optical axis (o) of the laser head and preferably have a solid cross-section extended in this direction;

– at least one rapid high-voltage switch (FK), by whose activation or ignition via the pulse-shaping network the high-voltage pulses can be produced at the laser electrodes (El1, El2),

– and the said pulse-shaping network (PFN) with first and second strip conductor capacitors ($C_F$, $C_K$) associated with the high-voltage switch and the laser head which, with their coatings and their dielectric layers lying between them, run substantially normally to the optical axis of the laser head, and are stacked substantially parallel to the optical axis of the laser head to form a capacitor stack, and are connected directly or with laterally projecting connecting lugs inside the pulse-shaping network,

characterised in that

– in the case of a pulse-shaping network (PFN) in Blümlein circuitry, of the coatings (1, 2, 3, 4) of the first and second strip conductor capacitors ($C_F$, $C_K$), at least the coating (4) of the second strip conductor capacitor ($C_K$) connected to the one laser electrode,

– and in the case of a pulse-shaping network (PFN) in charge-transfer circuitry, of the coatings of the first and second strip conductor capacitors ($C_F'$, $C_K'$), at least one joint face of the coatings (2', 3') of the first and second strip conductor capacitors connected commonly to the one laser electrode

– are divided into n coating sections ($B_1$, $B_2$ ... $B_n$) with $n-1$ joints ($g_1$, $g_2$ ... $g_{n-1}$) and adjacent coating sections (B) are conductively connected to each other in each case via coupling inductances ($L_1$, $L_2$ ... $L_{n-1}$).

2. Arrangement according to claim 1, for a cuboid capacitor stack, characterised in that the coating sections (B) each have rectangular bases with the height ($h_i$) and the length ($l_i$).

3. Arrangement according to claim 1 or 2, characterised in that the coupling inductances ($L_i$) have the form of small coils.

4. Arrangement according to claim 1 or 2, characterised in that the coupling inductances ($L_i$) are designed as small filaments.

5. Arrangement according to one of claims 1 to 4, characterised in that the connecting points for the coupling inductances ($L_i$) are arranged at separate points on the boundary edges of the coating sections ($B_i$), or are respectively distributed over the height of the coating sections ($B_i$).

6. Arrangement according to one of claims 1 to 5, characterised in that the coupling inductances ($L_i$) are connected to the coating sections ($B_i$) intermetallically by soft soldering, brazing or by welding, or mechanically by plugging, clamping and screwing or by a winding connection (wire wrap).

7. Arrangement according to one of claims 1 to 6, characterised in that the surfaces of the coating sections ($B_i$), and the joints ($g_i$) are each essentially of the same size.

8. Arrangement according to one of claims 1 to 6, characterized in that the surfaces of the coating sections ($B_i$), and/or the width of the joints ($g_i$) and/or the L, R values of the coupling inductances ($L_i$) are each at least partially different from each other.

## Revendications

1. Dispositif pour adapter des réseaux de mise en forme d'impulsions aux exigences du circuit d'excitation d'un système laser à haute énergie fonctionnant en mode TE, qui travaille avec une excitation produite par une décharge d'un condensateur, aussi homogène que possible et exempte d'arc électrique, dans l'espace logeant le gaz d'une chambre laser entre au moins deux électrodes produisant l'effet laser situées en vis-à-vis l'une de l'autre à une certaine distance, le système laser à haute énergie étant constitué par:

– une tête laser comportant les électrodes mentionnées, produisant l'effet laser, situées à l'intérieur de la chambre laser (LK) et qui s'étendent respectivement parallèlement à l'axe optique (o) de la tête laser et possèdent de préférence une section transversale complète étendue dans cette direction;

– au moins un interrupteur rapide à haute tension (FK), grâce à l'activation ou à l'amorçage duquel les amplitudes de haute tension peuvent être produites sur les électrodes produisant l'effet laser (EL1, EL2), par l'intermédiaire du réseau de mise en forme d'impulsions;

– et par ledit réseau (PFN) de mise en forme d'impulsions comportant des premier et second condensateurs ($C_F$, $C_K$) constitués par des conducteurs plats associés à l'interrupteur à haute tension et à la tête laser, dont les armatures s'étendent, de même que les couches diélectriques intercalées entre ces armatures, essentiellement perpendiculairement à l'axe optique de la tête laser et sont empilées essentiellement parallèlement à l'axe optique de la tête laser pour former un paquet de condensateurs et sont raccordées directement ou au moyen de languettes de raccordement ressorties latéralement, à l'intérieur du réseau de mise en forme d'impulsions, caractérisé par le fait que

– dans le cas d'un réseau (PFN) de mise en forme d'impulsions, en forme de circuit de Blümlein, parmi les armatures (1, 2, 3, 4) des premier et second condensateurs ($C_F$, $C_K$) constitués par des conducteurs en forme de bandes, au moins l'armature (4), raccordée à une électrode produisant l'effet laser, du second condensateur ($C_K$) constitué par des conducteurs en forme de bandes, et

– dans le cas d'un réseau (PFN) de mise en forme d'impulsions, en forme de circuit à transfert de charges, parmi les armatures des premier et second condensateurs ($C_F'$, $C_K'$) constitués par des conducteurs en forme de bandes, au moins une surface partielle des armatures (2', 3'), raccordées en commun à une électrode produisant l'effet laser, des premier et second condensateurs constitués par des conducteurs en forme de bandes,

– sont subdivisées en n armatures partielles ($B_1$, $B_2$ ... $B_n$) avec n–1 joints de séparation ($G_1$, $G_2$, ... $G_{n-1}$) et que des armatures partielles voisines (B) sont reliées respectivement entre elles de façon conductrice par l'intermédiaire d'inductances de couplage ($L_1$, $L_2$ ... $L_{n-1}$).

2. Dispositif suivant la revendication 1, pour une pile parallélépipédique de condensateurs, caractérisé par le fait que les armatures partielles (B) possèdent des surfaces de base respectivement rectangulaires de hauteur ($h_i$) et de longueur ($l_i$).

3. Dispositif suivant la revendication 1 ou 2, caractérisé par le fait que les inductances de couplage ($L_i$) sont réalisées sous la forme de petites bobines.

4. Dispositif suivant la revendication 1 ou 2, caractérisé par le fait que les inductances de couplage ($L_i$) sont réalisées sous la forme de petits morceaux de fil.

5. Dispositif suivant l'une des revendications 1 à 4, caractérisé par le fait que les points de raccordement pour les inductances de couplage ($L_i$) sont situés en des points discrets des bords limites des armatures partielles ($B_i$) ou sont répartis sur la hauteur des armatures partielles ($B_i$).

6. Dispositif suivant l'une des revendications 1 à 5, caractérisé par le fait que les inductances de couplage ($L_i$) sont raccordées aux armatures partielles ($B_i$) selon une liaison intermétallique par brasage tendre, brasage dur, ou par soudage ou mécaniquement par enfichage, serrage et vissage ou par une liaison à enroulement (wire wrap).

7. Dispositif suivant l'une des revendications 1 à 6, caractérisé par le fait que les surfaces des armatures partielles ($B_i$) et les joints de séparation ($G_i$) sont respectivement essentiellement identiques entre elles.

8. Dispositif suivant l'une des revendications 1 à 6, caractérisé par le fait que les surfaces respectives des armatures partielles ($B_i$) et/ou la largeur des joints de séparation ($g_i$) et/ou les valeurs (L, R) des inductances de couplage ($L_i$) sont au moins partiellement différentes les unes des autres.

FIG 1

FIG 2

FIG 3

FIG 4

FIG 5